# EUROPEAN PATENT APPLICATION

(11) **EP 4 651 357 A1**
(43) Date of publication of application: **19.11.2025**
(21) Application number: 24795478.7
(22) Date of filing: 25.01.2024
(51) Int. Cl.: H02M 3/335

(54) **VOLTAGE CONVERTER AND POWER SUPPLY SYSTEM**

(30) Priority: 28.04.2023 CN 202310487981
(71) Applicant: Huawei Digital Power Technologies Co., Ltd., Shenzhen, Guangdong 518043 (CN)
(72) Inventor: MO, Shanglin, Shenzhen, Guangdong 518043 (CN); CHIN, Ken, Shenzhen, Guangdong 518043 (CN); LUO, Yu, Shenzhen, Guangdong 518043 (CN); QIU, Nengchao, Shenzhen, Guangdong 518043 (CN)
(74) Representative: Gill Jennings & Every LLP
(86) International application number: PCT/CN2024/073946
(87) International publication number: WO 2024/222089

(57) **Abstract**

This application provides a voltage converter and a power supply system. The voltage converter includes a voltage conversion circuit and a controller. The voltage conversion circuit is configured to receive an input voltage from a power supply module, and perform buck conversion on the input voltage to obtain an output voltage, to supply power to a load. The controller is configured to: when the voltage conversion circuit is in a first state, control the output voltage by controlling a level conduction signal of the voltage conversion circuit, to supply power to the load. The first state is a state in which a value of a duty ratio of the voltage conversion circuit is greater than or equal to a preset duty ratio value. The first state includes a first saturation state and a second saturation state. In the voltage converter and the power supply system provided in this application, when the voltage conversion circuit enters or exits a saturation state, an output voltage value changes smoothly and has small undershoot or overshoot, to prevent damage to the load and improve service life of the load.

## Description

This application claims priority to Chinese Patent Application No. 202310487981.6, filed with the China National Intellectual Property Administration on April 28, 2023 and entitled "VOLTAGE CONVERTER AND POWER SUPPLY SYSTEM", which is incorporated herein by reference in its entirety.

### TECHNICAL FIELD

This application relates to the field of power electronics technologies, and more specifically, to a voltage converter and a power supply system.

### BACKGROUND

A direct current voltage converter is most widely used in a power supply technology, and may convert an input voltage into a lower voltage for output. An electronic device using a voltage converter may operate within a wide input voltage range.

When an input voltage stably falls within a normal operating voltage range, an output voltage obtained through conversion based on a primary side to secondary side turn ratio of a transformer may reach a rated output voltage needed for normal operation of a load. When an input voltage is higher than a normal operating voltage threshold, the voltage converter may stabilize an output voltage at a rated output voltage by adjusting a duty ratio of a voltage circuit. When an input voltage is lower than a normal operating voltage threshold, and an output voltage cannot reach a rated output voltage even if the voltage converter adjusts output of a voltage circuit to reach a maximum duty ratio, a buck circuit enters a saturation state.

When an input voltage instantaneously drops from a normal operating voltage threshold range, due to a limitation of adjustment response time of different voltage circuits and different drop speeds of the input voltage, an output voltage has different degrees of undershoot and finally tends to be stable, and a voltage circuit enters a saturation state and performs output at a maximum duty ratio of the circuit. When the voltage circuit is in the saturation state and the input voltage instantaneously rises and recovers to the normal operating voltage threshold range, the voltage circuit still performs output at the maximum duty ratio, and the entire circuit has severe overshoot and an impulse current. This is likely to cause damage to the load.

### SUMMARY

This application provides a voltage converter and a power supply system. The voltage converter can determine a saturation state of a voltage conversion circuit of the voltage converter based on a sampling value of the voltage conversion circuit, and adjust a level conduction signal of the circuit based on the saturation state of the circuit, to adjust an output voltage. In this way, when the voltage conversion circuit enters or exits the saturation state, an output voltage value changes smoothly and has small undershoot or overshoot, so that the voltage conversion circuit stably outputs a voltage, to prevent damage to a load and improve service life of the load.

According to a first aspect, a voltage converter is provided. The voltage converter includes a voltage conversion circuit and a controller. Specifically, the voltage conversion circuit is configured to receive an input voltage from a power supply module, and perform buck conversion on the input voltage to obtain an output voltage, to supply power to a load. The controller is configured to: when the voltage conversion circuit is in a first state, control the output voltage by controlling a level conduction signal of the voltage conversion circuit, to supply power to the load. The first state is a state in which a value of a duty ratio of the voltage conversion circuit is greater than or equal to a preset duty ratio value. The first state includes a first saturation state and a second saturation state. The first saturation state is a state in which the voltage conversion circuit is in the first state and a value of the input voltage is less than a preset input voltage value. The second saturation state is a state in which the voltage conversion circuit is in the first state and a value of the output voltage is less than or equal to a preset output voltage value.

According to this technical solution, the controller determines whether the voltage conversion circuit is in the first state, and performs subdivision for the first state. The controller adjusts, based on a saturation state of the voltage conversion circuit, the level conduction signal of the circuit, to adjust the output voltage. In this way, when the voltage conversion circuit enters or is in the saturation state, an output voltage value changes smoothly and has small undershoot or overshoot, so that the voltage conversion circuit stably outputs a voltage, to prevent damage to the load and improve service life of the load.

It should be understood that the first state is a state of the voltage conversion circuit in the following case: When the input voltage and the output voltage of the voltage conversion circuit fall within a normal operating range, the input voltage suddenly drops, and the output voltage of the circuit still does not meet an operating voltage needed by the load even if the level conduction signal of the circuit is adjusted to a maximum range of the circuit. When the voltage conversion circuit is in the first state, a value of the duty ratio of the voltage conversion circuit reaches a maximum value of the circuit, and the maximum value that the value of the duty ratio of the circuit can reach is determined based on characteristics of a component included in the circuit. This is not particularly limited in this application. In some embodiments, the first state of the voltage conversion circuit is also referred to as the saturation state of the voltage conversion circuit. This is not particularly limited in this application.

It should be understood that the preset duty ratio value includes the maximum value that the duty ratio of the voltage conversion circuit can reach, and the maximum value that the value of the duty ratio of the circuit can reach is determined based on the characteristics of the component included in the circuit. This is not particularly limited in this application. In some embodiments, a state in which the value of the duty ratio is greater than or equal to the preset duty ratio value is also referred to as a state in which the duty ratio reaches saturation, a state in which the value of the duty ratio reaches the maximum, or the like. This is not particularly limited in this application.

It should be understood that the preset input voltage value includes a lower limit value of an input voltage range of the voltage conversion circuit during normal operation of the load connected to the voltage conversion circuit. The input voltage range of the circuit during normal operation and the lower limit value of the voltage range are determined based on the characteristics of the component included in the circuit. This is not particularly limited in this application. In some embodiments of this application, a hysteresis comparator is used to compare the value of the input voltage with the preset input voltage value. The preset input voltage value serves as a lower limit of the hysteresis comparator. A specific value of the preset input voltage value is determined based on the used hysteresis comparator. This is not particularly limited in this application.

It should be understood that the preset output voltage value includes a value of a voltage needed during normal operation of the load connected to the voltage conversion circuit. A value of the preset output voltage value of the circuit is determined based on characteristics of the load connected to the circuit. This is not particularly limited in this application.

With reference to the first aspect, in some implementations of the first aspect, the controller includes a sampling module, a determining module, a compensation module, and a drive module. Specifically, the sampling module is configured to obtain a value of the duty ratio of the voltage conversion circuit, a value of the input voltage, and a value of the output voltage at each sampling moment. A sampling value corresponding to the duty ratio in a first time period is a first value, a sampling value corresponding to the input voltage in the first time period is a second value, and a sampling value corresponding to the output voltage in the first time period is a third value. The first time period is a time period in which the voltage conversion circuit is in the first state. The determining module is configured to determine, based on the first value, the second value, and the third value, that the voltage conversion circuit is in the first saturation state or the second saturation state in the first time period. The compensation module is configured to determine a corresponding compensation value based on the first saturation state or the second saturation state. The drive module is configured to generate a drive signal based on the compensation value. The drive signal is used to drive at least one switching transistor in the voltage conversion circuit, to control the voltage conversion circuit to perform buck conversion on the input voltage to obtain the output voltage, to supply power to the load.

According to this technical solution, the sampling module in the controller samples the input voltage, the output voltage, and the duty ratio of the voltage conversion circuit, the determining module determines a state of the voltage conversion circuit based on sampling values, the compensation module determines a corresponding compensation value based on the state of the circuit, and the drive module generates a corresponding drive signal based on the compensation value, so that a switching transistor in the circuit is adjusted through the drive signal, to adjust values of the duty ratio and the output voltage of the circuit. In this way, when the voltage conversion circuit enters or is in the saturation state, an output voltage value changes smoothly and has small undershoot or overshoot, so that the voltage conversion circuit stably outputs a voltage, to prevent damage to the load and improve service life of the load.

With reference to the first aspect, in some implementations of the first aspect, the determining module is further configured to determine whether the voltage conversion circuit is in the first saturation state or the second saturation state. Specifically, when the first value of the voltage conversion circuit is greater than or equal to the preset duty ratio value, the second value is less than the preset input voltage value, and the third value is less than or equal to the preset output voltage value, it is determined that the voltage conversion circuit is in the first saturation state; or when the first value of the voltage conversion circuit is greater than or equal to the preset duty ratio value and the third value is less than or equal to the preset output voltage value, it is determined that the voltage conversion circuit is in the second saturation state.

According to this technical solution, the determining module compares a value of the input voltage, a value of the output voltage, and a value of the duty ratio of the circuit at a sampling moment with the preset values, to determine a state of the voltage conversion circuit at the sampling moment. In this application, the saturation state of the circuit is subdivided into the first saturation state and the second saturation state, so that adjustment and compensation can be performed more precisely based on different saturation states of the circuit. In this way, when the voltage conversion circuit enters or is in the saturation state, an output voltage value changes smoothly and has small undershoot or overshoot, so that the voltage conversion circuit stably outputs a voltage, to prevent damage to the load and improve service life of the load.

With reference to the first aspect, in some implementations of the first aspect, the determining module includes two types of components: a comparator and an AND gate. Specifically, a first comparator is configured to compare the first value with the preset duty ratio value, a second comparator is configured to compare the third value with the preset output voltage value, and a third comparator is configured to compare the second value with the preset input voltage value. A first AND gate is configured to obtain comparison results of the first comparator, the second comparator, and the third comparator, and determine to output first indication information, where the first indication information indicates whether the voltage conversion circuit is in the first saturation state. A second AND gate is configured to obtain comparison results of the first comparator and the second comparator, and determine to output second indication information, where the second indication information indicates whether the voltage conversion circuit is in the second saturation state.

According to this technical solution, the determining module compares a sampling value with each preset value through the comparator and the logic AND gate, and outputs indication information to indicate a state of the voltage conversion circuit. A circuit structure is simple and stable, and the indication information can be accurately output. In addition, a delay of circuit adjustment is reduced, and adjustment and compensation can be performed more quickly based on different saturation states of the circuit. In this way, when the voltage conversion circuit enters or is in the saturation state, an output voltage value changes smoothly and has small undershoot or overshoot, so that the voltage conversion circuit stably outputs a voltage, to prevent damage to the load and improve service life of the load.

It should be understood that a function of the comparator includes a condition determining comparator, a hysteresis comparator, and the like. This is not particularly limited in this application. In some embodiments of this application, the first comparator and the second comparator include the condition determining comparator, and determine whether input information meets a specified condition, to output determining information; and the third comparator includes the hysteresis comparator, and determines, based on a setting of a threshold range of the comparator, whether input information is within the specified threshold range, to output determining information. The output determining information includes logic information 1 and 0. This is not particularly limited in this application.

It should be understood that a function of the AND gate includes logic AND determining. Indication information is output through a logic AND operation based on the output determining information of the comparator that is input. The indication information includes logic information 1 and 0. The logic information 1 may be defined to indicate that the voltage conversion circuit is in a specific state, and the logic information 0 may be defined to indicate that the voltage conversion circuit is not in a specific state. A specific definition may be specified based on an actual circuit structure. This is not particularly limited in this application.

With reference to the first aspect, in some implementations of the first aspect, the compensation module includes a first compensation module and a second compensation module. Specifically, the first compensation module is configured to perform a proportional compensation operation, and the second compensation module is configured to perform an integral compensation operation. When the voltage conversion circuit is in the first saturation state, input of the first compensation module and the second compensation module is a difference between the third value and the preset output voltage value. When the voltage conversion circuit is in the second saturation state, input of the first compensation module is a difference between the third value and the preset output voltage value, and input of the second compensation module is 0.

According to this technical solution, the compensation module determines a compensation adjustment value for the voltage conversion circuit through the proportional compensation operation and the integral compensation operation, and assigns values to input of the proportional compensation operation and the integral compensation operation based on different saturation states of the circuit. A more precise compensation value is output through a proportional-integral compensation operation to compensate for the circuit, so that adjustment can be performed more precisely based on different saturation states of the circuit. In this way, when the voltage conversion circuit enters or is in the saturation state, an output voltage value changes smoothly and has small undershoot or overshoot, so that the voltage conversion circuit stably outputs a voltage, to prevent damage to the load and improve service life of the load.

With reference to the first aspect, in some implementations of the first aspect, the controller further includes a calculation module. Specifically, the calculation module is configured to calculate a reference value at each sampling moment based on the value of the input voltage at each sampling moment and the preset duty ratio value. The compensation module is further configured to determine a second compensation value in a second time period based on a first reference value. The first reference value is a reference value at a sampling moment corresponding to the first time period. The second time period is a time period of preset duration that elapses after the voltage conversion circuit exits the first state. The drive module is further configured to generate a drive signal in the second time period based on the obtained second compensation value. The drive signal is used to drive at least one switching transistor in the voltage conversion circuit, to control the voltage conversion circuit to perform buck conversion on the input voltage to obtain the output voltage, to supply power to the load.

According to this technical solution, the controller further includes the calculation module. The calculation module is configured to calculate the reference value at each sampling moment. When the second time period elapses after the voltage conversion circuit exits the first state, the compensation module determines the second compensation value based on the first reference value in the first state, and the drive module generates the drive signal based on the compensation value to adjust the output voltage of the voltage conversion circuit. At a moment at which the circuit exits the first state, a compensation value for a next moment is calculated based on a sampling value at the end of the first state, so that more precise adjustment can be performed on the circuit. In this way, when the voltage conversion circuit exits the saturation state, an output voltage value changes smoothly and has small undershoot or overshoot, so that the voltage conversion circuit stably outputs a voltage, to prevent damage to a load and improve service life of the load.

It should be understood that the calculation module may perform an operation on an input value by using a preset calculation formula to obtain an output value. A specific preset calculation formula is determined based on a structure of the controller. This is not particularly limited in this application.

According to a second aspect, a power supply system is provided. The power supply system includes an equipment room power supply, a voltage converter, and a load. The voltage converter includes a voltage conversion circuit and a controller. Specifically, the voltage conversion circuit is configured to receive an input voltage from a power supply module, and perform buck conversion on the input voltage to obtain an output voltage, to supply power to a load. The controller is configured to: when the voltage conversion circuit is in a first state, control the output voltage by controlling a level conduction signal of the voltage conversion circuit, to supply power to the load. The first state is a state in which a value of a duty ratio of the voltage conversion circuit is greater than or equal to a preset duty ratio value. The first state includes a first saturation state and a second saturation state. The first saturation state is a state in which the voltage conversion circuit is in the first state and a value of the input voltage is less than a preset input voltage value. The second saturation state is a state in which the voltage conversion circuit is in the first state and a value of the output voltage is less than or equal to a preset output voltage value.

According to this technical solution, the controller determines whether the voltage conversion circuit is in the first state, and performs subdivision for the first state. The controller adjusts, based on a saturation state of the voltage conversion circuit, the level conduction signal of the circuit, to adjust the output voltage. In this way, when the voltage conversion circuit enters or is in the saturation state, an output voltage value changes smoothly and has small undershoot or overshoot, so that the power supply system stably outputs a voltage, to prevent damage to the load and improve service life of the load.

It should be understood that the first state is a state of the voltage conversion circuit in the following case: When the input voltage and the output voltage of the voltage conversion circuit fall within a normal operating range, the input voltage suddenly drops, and the output voltage of the circuit still does not meet an operating voltage needed by the load even if the level conduction signal of the circuit is adjusted to a maximum range of the circuit. When the voltage conversion circuit is in the first state, a value of the duty ratio of the voltage conversion circuit reaches a maximum value of the circuit, and the maximum value that the value of the duty ratio of the circuit can reach is determined based on characteristics of a component included in the circuit. This is not particularly limited in this application. In some embodiments, the first state of the voltage conversion circuit is also referred to as the saturation state of the voltage conversion circuit. This is not particularly limited in this application.

It should be understood that the preset duty ratio value includes the maximum value that the duty ratio of the voltage conversion circuit can reach, and the maximum value that the value of the duty ratio of the circuit can reach is determined based on the characteristics of the component included in the circuit. This is not particularly limited in this application. In some embodiments, a state in which the value of the duty ratio is greater than or equal to the preset duty ratio value is also referred to as a state in which the duty ratio reaches saturation, a state in which the value of the duty ratio reaches the maximum, or the like. This is not particularly limited in this application.

It should be understood that the preset input voltage value includes a lower limit value of an input voltage range of the voltage conversion circuit during normal operation of the load connected to the voltage conversion circuit. The input voltage range of the circuit during normal operation and the lower limit value of the voltage range are determined based on the characteristics of the component included in the circuit. This is not particularly limited in this application. In some embodiments of this application, a hysteresis comparator is used to compare the value of the input voltage with the preset input voltage value. The preset input voltage value serves as a lower limit of the hysteresis comparator. A specific value of the preset input voltage value is determined based on the used hysteresis comparator. This is not particularly limited in this application.

It should be understood that the preset output voltage value includes a value of a voltage needed during normal operation of the load connected to the voltage conversion circuit. A value of the preset output voltage value of the circuit is determined based on characteristics of the load connected to the circuit. This is not particularly limited in this application.

With reference to the second aspect, in some implementations of the second aspect, the controller includes a sampling module, a determining module, a compensation module, and a drive module. Specifically, the sampling module is configured to obtain a value of the duty ratio of the voltage conversion circuit, a value of the input voltage, and a value of the output voltage at each sampling moment. A sampling value corresponding to the duty ratio in a first time period is a first value, a sampling value corresponding to the input voltage in the first time period is a second value, and a sampling value corresponding to the output voltage in the first time period is a third value. The first time period is a time period in which the voltage conversion circuit is in the first state. The determining module is configured to determine, based on the first value, the second value, and the third value, that the voltage conversion circuit is in the first saturation state or the second saturation state in the first time period. The compensation module is configured to determine a corresponding compensation value based on the first saturation state or the second saturation state. The drive module is configured to generate a drive signal based on the compensation value. The drive signal is used to drive at least one switching transistor in the voltage conversion circuit, to control the voltage conversion circuit to perform buck conversion on the input voltage to obtain the output voltage, to supply power to the load.

According to this technical solution, the sampling module in the controller samples the input voltage, the output voltage, and the duty ratio of the voltage conversion circuit, the determining module determines a state of the voltage conversion circuit based on sampling values, the compensation module determines a corresponding compensation value based on the state of the circuit, and the drive module generates a corresponding drive signal based on the compensation value, so that a switching transistor in the circuit is adjusted through the drive signal, to adjust values of the duty ratio and the output voltage of the circuit. In this way, when the voltage conversion circuit enters or is in the saturation state, an output voltage value changes smoothly and has small undershoot or overshoot, so that the power supply system stably outputs a voltage, to prevent damage to the load and improve service life of the load.

With reference to the second aspect, in some implementations of the second aspect, the determining module is further configured to determine whether the voltage conversion circuit is in the first saturation state or the second saturation state. Specifically, when the first value of the voltage conversion circuit is greater than or equal to the preset duty ratio value, the second value is less than the preset input voltage value, and the third value is less than or equal to the preset output voltage value, it is determined that the voltage conversion circuit is in the first saturation state; or when the first value of the voltage conversion circuit is greater than or equal to the preset duty ratio value and the third value is less than or equal to the preset output voltage value, it is determined that the voltage conversion circuit is in the second saturation state.

According to this technical solution, the determining module compares a value of the input voltage, a value of the output voltage, and a value of the duty ratio of the circuit at a sampling moment with the preset values, to determine a state of the voltage conversion circuit at the sampling moment. In this application, the saturation state of the circuit is subdivided into the first saturation state and the second saturation state, so that adjustment and compensation can be performed more precisely based on different saturation states of the circuit. In this way, when the voltage conversion circuit enters or is in the saturation state, an output voltage value changes smoothly and has small undershoot or overshoot, so that the power supply system stably outputs a voltage, to prevent damage to the load and improve service life of the load.

With reference to the second aspect, in some implementations of the second aspect, the controller further includes a calculation module. Specifically, the calculation module is configured to calculate a reference value at each sampling moment based on the value of the input voltage at each sampling moment and the preset duty ratio value. The compensation module is further configured to determine a second compensation value in a second time period based on a first reference value. The first reference value is a reference value at a sampling moment corresponding to the first time period. The second time period is a time period of preset duration that elapses after the voltage conversion circuit exits the first state. The drive module is further configured to generate a drive signal in the second time period based on the obtained second compensation value. The drive signal is used to drive at least one switching transistor in the voltage conversion circuit, to control the voltage conversion circuit to perform buck conversion on the input voltage to obtain the output voltage, to supply power to the load.

According to this technical solution, the controller further includes the calculation module. The calculation module is configured to calculate the reference value at each sampling moment. When the second time period elapses after the voltage conversion circuit exits the first state, the compensation module determines the second compensation value based on the first reference value in the first state, and the drive module generates the drive signal based on the compensation value to adjust the output voltage of the voltage conversion circuit. At a moment at which the circuit exits the first state, a compensation value for a next moment is calculated based on a sampling value at the end of the first state, so that more precise adjustment can be performed on the circuit. In this way, when the voltage conversion circuit exits the saturation state, an output voltage value changes smoothly and has small undershoot or overshoot, so that the power supply system stably outputs a voltage, to prevent damage to a load and improve service life of the load.

It should be understood that the calculation module may perform an operation on an input value by using a preset calculation formula to obtain an output value. A specific preset calculation formula is determined based on a structure of the controller. This is not particularly limited in this application.

According to a third aspect, a power supply device is provided. The power supply device is used in a direct current voltage conversion scenario, and is configured to receive a direct current from a power generation device and perform voltage conversion. A voltage obtained through conversion is converted by a transformer into an alternating current, and the alternating current is output to a load or a power grid. The power generation device includes one of a photovoltaic array or an energy storage battery. The power supply device includes a housing, a circuit board disposed in the housing, and a voltage converter disposed on the circuit board. The voltage converter includes a voltage conversion circuit and a controller. Specifically, the voltage conversion circuit is configured to receive an input voltage from a power supply module, and perform buck conversion on the input voltage to obtain an output voltage, to supply power to a load. The controller is configured to: when the voltage conversion circuit is in a first state, control the output voltage by controlling a level conduction signal of the voltage conversion circuit, to supply power to the load. The first state is a state in which a value of a duty ratio of the voltage conversion circuit is greater than or equal to a preset duty ratio value. The first state includes a first saturation state and a second saturation state. The first saturation state is a state in which the voltage conversion circuit is in the first state and a value of the input voltage is less than a preset voltage value. The second saturation state is a state in which the voltage conversion circuit is in the first state and a value of the output voltage is less than or equal to a preset output voltage value.

According to this technical solution, the controller determines whether the voltage conversion circuit is in the first state, and performs subdivision for the first state. The controller adjusts, based on a saturation state of the voltage conversion circuit, the level conduction signal of the circuit, to adjust the output voltage. In this way, when the voltage conversion circuit enters or is in the saturation state, an output voltage value changes smoothly and has small undershoot or overshoot, so that the power supply device stably outputs a voltage, to prevent damage to the load and improve service life of the load.

It should be understood that the first state is a state of the voltage conversion circuit in the following case: When the input voltage and the output voltage of the voltage conversion circuit fall within a normal operating range, the input voltage suddenly drops, and the output voltage of the circuit still does not meet an operating voltage needed by the load even if the level conduction signal of the circuit is adjusted to a maximum range of the circuit. When the voltage conversion circuit is in the first state, a value of the duty ratio of the voltage conversion circuit reaches a maximum value of the circuit, and the maximum value that the value of the duty ratio of the circuit can reach is determined based on characteristics of a component included in the circuit. This is not particularly limited in this application. In some embodiments, the first state of the voltage conversion circuit is also referred to as the saturation state of the voltage conversion circuit. This is not particularly limited in this application.

It should be understood that the preset duty ratio value includes the maximum value that the duty ratio of the voltage conversion circuit can reach, and the maximum value that the value of the duty ratio of the circuit can reach is determined based on the characteristics of the component included in the circuit. This is not particularly limited in this application. In some embodiments, a state in which the value of the duty ratio is greater than or equal to the preset duty ratio value is also referred to as a state in which the duty ratio reaches saturation, a state in which the value of the duty ratio reaches the maximum, or the like. This is not particularly limited in this application.

It should be understood that the preset input voltage value includes a lower limit value of an input voltage range of the voltage conversion circuit during normal operation of the load connected to the voltage conversion circuit. The input voltage range of the circuit during normal operation and the lower limit value of the voltage range are determined based on the characteristics of the component included in the circuit. This is not particularly limited in this application. In some embodiments of this application, a hysteresis comparator is used to compare the value of the input voltage with the preset input voltage value. The preset input voltage value serves as a lower limit of the hysteresis comparator. A specific value of the preset input voltage value is determined based on the used hysteresis comparator. This is not particularly limited in this application.

It should be understood that the preset output voltage value includes a value of a voltage needed during normal operation of the load connected to the voltage conversion circuit. A value of the preset output voltage value of the circuit is determined based on characteristics of the load connected to the circuit. This is not particularly limited in this application.

With reference to the third aspect, in some implementations of the third aspect, the controller includes a sampling module, a determining module, a compensation module, and a drive module. Specifically, the sampling module is configured to obtain a value of the duty ratio of the voltage conversion circuit, a value of the input voltage, and a value of the output voltage at each sampling moment. A sampling value corresponding to the duty ratio in a first time period is a first value, a sampling value corresponding to the input voltage in the first time period is a second value, and a sampling value corresponding to the output voltage in the first time period is a third value. The first time period is a time period in which the voltage conversion circuit is in the first state. The determining module is configured to determine, based on the first value, the second value, and the third value, that the voltage conversion circuit is in the first saturation state or the second saturation state in the first time period. The compensation module is configured to determine a corresponding compensation value based on the first saturation state or the second saturation state. The drive module is configured to generate a drive signal based on the compensation value. The drive signal is used to drive at least one switching transistor in the voltage conversion circuit, to control the voltage conversion circuit to perform buck conversion on the input voltage to obtain the output voltage, to supply power to the load.

According to this technical solution, the sampling module in the controller samples the input voltage, the output voltage, and the duty ratio of the voltage conversion circuit, the determining module determines a state of the voltage conversion circuit based on sampling values, the compensation module determines a corresponding compensation value based on the state of the circuit, and the drive module generates a corresponding drive signal based on the compensation value, so that a switching transistor in the circuit is adjusted through the drive signal, to adjust values of the duty ratio and the output voltage of the circuit. In this way, when the voltage conversion circuit enters or is in the saturation state, an output voltage value changes smoothly and has small undershoot or overshoot, so that the power supply device stably outputs a voltage, to prevent damage to the load and improve service life of the load.

With reference to the third aspect, in some implementations of the third aspect, the determining module is further configured to determine whether the voltage conversion circuit is in the first saturation state or the second saturation state. Specifically, when the first value of the voltage conversion circuit is greater than or equal to the preset duty ratio value, the second value is less than the preset input voltage value, and the third value is less than or equal to the preset output voltage value, it is determined that the voltage conversion circuit is in the first saturation state; or when the first value of the voltage conversion circuit is greater than or equal to the preset duty ratio value and the third value is less than or equal to the preset output voltage value, it is determined that the voltage conversion circuit is in the second saturation state.

According to this technical solution, the determining module compares a value of the input voltage, a value of the output voltage, and a value of the duty ratio of the circuit at a sampling moment with the preset values, to determine a state of the voltage conversion circuit at the sampling moment. In this application, the saturation state of the circuit is subdivided into the first saturation state and the second saturation state, so that adjustment and compensation can be performed more precisely based on different saturation states of the circuit. In this way, when the voltage conversion circuit enters or is in the saturation state, an output voltage value changes smoothly and has small undershoot or overshoot, so that the power supply device stably outputs a voltage, to prevent damage to the load and improve service life of the load.

With reference to the third aspect, in some implementations of the third aspect, the compensation module includes a first compensation module and a second compensation module. Specifically, the first compensation module is configured to perform a proportional compensation operation, and the second compensation module is configured to perform an integral compensation operation. When the voltage conversion circuit is in the first saturation state, input of the first compensation module and the second compensation module is a difference between the third value and the preset output voltage value. When the voltage conversion circuit is in the second saturation state, input of the first compensation module is a difference between the third value and the preset output voltage value, and input of the second compensation module is 0.

According to this technical solution, the compensation module determines a compensation adjustment value for the voltage conversion circuit through the proportional compensation operation and the integral compensation operation, and assigns values to input of the proportional compensation operation and the integral compensation operation based on different saturation states of the circuit. A more precise compensation value is output through a proportional-integral compensation operation to compensate for the circuit, so that adjustment can be performed more precisely based on different saturation states of the circuit. In this way, when the voltage conversion circuit enters or is in the saturation state, an output voltage value changes smoothly and has small undershoot or overshoot, so that the power supply device stably outputs a voltage, to prevent damage to the load and improve service life of the load.

With reference to the third aspect, in some implementations of the third aspect, the controller further includes a calculation module. Specifically, the calculation module is configured to calculate a reference value at each sampling moment based on the value of the input voltage at each sampling moment and the preset duty ratio value. The compensation module is further configured to determine a second compensation value in a second time period based on a first reference value. The first reference value is a reference value at a sampling moment corresponding to the first time period. The second time period is a time period of preset duration that elapses after the voltage conversion circuit exits the first state. The drive module is further configured to generate a drive signal in the second time period based on the obtained second compensation value. The drive signal is used to drive at least one switching transistor in the voltage conversion circuit, to control the voltage conversion circuit to perform buck conversion on the input voltage to obtain the output voltage, to supply power to the load.

According to this technical solution, the controller further includes the calculation module. The calculation module is configured to calculate the reference value at each sampling moment. When the second time period elapses after the voltage conversion circuit exits the first state, the compensation module determines the second compensation value based on the first reference value in the first state, and the drive module generates the drive signal based on the compensation value to adjust the output voltage of the voltage conversion circuit. At a moment at which the circuit exits the first state, a compensation value for a next moment is calculated based on a sampling value at the end of the first state, so that more precise adjustment can be performed on the circuit. In this way, when the voltage conversion circuit exits the saturation state, an output voltage value changes smoothly and has small undershoot or overshoot, so that the power supply device stably outputs a voltage, to prevent damage to a load and improve service life of the load.

It should be understood that the calculation module may perform an operation on an input value by using a preset calculation formula to obtain an output value. A specific preset calculation formula is determined based on a structure of the controller. This is not particularly limited in this application.

### BRIEF DESCRIPTION OF DRAWINGS

FIG. 1 is a schematic of a typical voltage conversion circuit;
FIG. 2 is a diagram of a principle of a voltage converter according to an embodiment of this application;
FIG. 3 is a diagram of a principle of a controller in a voltage converter according to an embodiment of this application;
FIG. 4 is a diagram of a structure and a principle of a controller according to an embodiment of this application;
FIG. 5 is a diagram of a structure of a determining module in a controller according to an embodiment of this application;
FIG. 6 is a diagram of a structure of a power supply device according to an embodiment of this application; and
FIG. 7 is a diagram of a structure of a power supply system according to an embodiment of this application.

### DESCRIPTION OF EMBODIMENTS

The following describes technical solutions of this application with reference to accompanying drawings.

Embodiments of this application may be applied to an application scenario in which a direct current output, such as a DC-DC power supply or a battery, is further connected, through a power-on/off switch, to one or more ports for output. For example, embodiments of this application may be applied to a straight-through lithium battery, an electronic switch, a blade power supply that supplies power through multi-band load units, or a cabinet power supply.

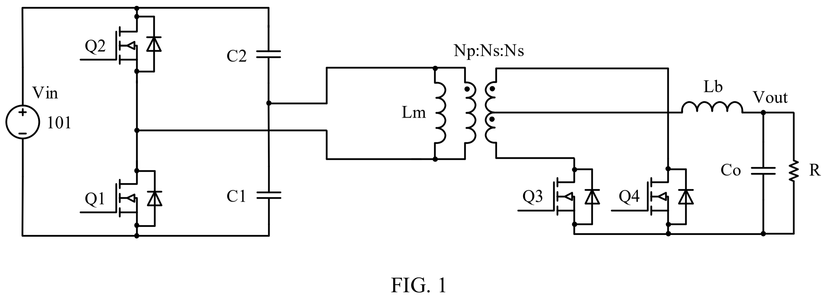

FIG. 1 is a schematic of a typical voltage conversion circuit. In a possible implementation, the voltage conversion circuit includes a primary-side half-bridge circuit, an isolation transformer, a secondary-side synchronization circuit, and an output circuit. As shown in FIG. 1, the primary-side half-bridge circuit includes a power input module 101, upper and lower bridge arm field-effect transistors Q2 and Q1, and voltage divider capacitors C1 and C2. The isolation transformer includes an excitation inductor Lm and a transformer coil. A value of a turn ratio between a primary-side coil and a secondary-side coil of the isolation transformer is determined based on a voltage input by a power supply and a voltage needed by a load. This is not particularly limited in this application. In this embodiment of this application, the primary side to secondary side turn ratio of the isolation transformer is as follows: Np:Ns=3:2. The secondary-side synchronization circuit includes rectifier transistors Q3 and Q4. The output circuit includes a filter inductor Lb, a filter capacitor Co, and a load R. An output voltage is Vout.

In a possible implementation, when a direct current voltage Vin input to the power input module 101 of the primary-side half-bridge circuit ranges from 32 V to 75 V, a rated voltage at the capacitor Co end in the output circuit is 12 V, in other words, a rated voltage value of the output voltage Vout of the voltage conversion circuit is 12 V. When the input voltage Vin of the power input module 101 is greater than a standard input voltage value 41 V, the voltage conversion circuit may adjust a loop duty ratio (Duty Ratio) to stabilize the output voltage Vout at the rated output voltage value 12 V. When the input voltage Vin of the power input module 101 is less than the standard input voltage value 41 V, even if the voltage conversion circuit adjusts a Duty value to a maximum value by adjusting the loop duty ratio, the entire voltage conversion circuit still cannot keep the output voltage Vout at the rated output voltage 12 V. In this case, an actual output voltage value Vout is always less than the rated output voltage value, the voltage conversion circuit enters a first state, and the voltage conversion circuit is in a first time period.

It should be understood that the first time period includes a time period in which the voltage conversion circuit is in the first state, and the first state includes a saturation state of the circuit. Specifically, the first state includes a first saturation state and a second saturation state, where the first saturation state includes a voltage saturation state, and the second saturation state includes a current saturation state.

It should be understood that the voltage conversion circuit, a buck circuit, a buck conversion circuit, and the like are merely names for reference, and do not constitute any limitation on the protection scope of this application. An actual protection scope is subject to the claims. This is not particularly limited in this application.

Based on this, when the input voltage Vin of the voltage conversion circuit instantaneously drops from the standard input voltage value, due to a limitation of loop adjustment response time of the voltage conversion circuit, when a change speed at which the input voltage Vin drops varies, a value of the output voltage Vout may have different degrees of undershoot. A higher change speed at which the input voltage Vin drops causes larger undershoot. When the voltage conversion circuit tends to be in a stable state again, the output voltage Vout is lower than the rated output voltage value, the voltage conversion circuit performs output in a state with a maximum duty ratio, and the entire voltage conversion circuit enters the saturation state.

Based on this, when the input voltage Vin of the voltage conversion circuit instantaneously rises from a value lower than the standard input voltage value to a value higher than the standard input voltage value, because the loop of the voltage conversion circuit is in the saturation state when Vin is lower than the standard input voltage value, the circuit performs output at the maximum duty ratio, and the loop adjustment response time is long, after Vin instantaneously rises, the entire voltage conversion circuit still performs output at the maximum duty ratio at this moment. Therefore, a value of the output voltage Vout has severe overshoot and causes an impulse current.

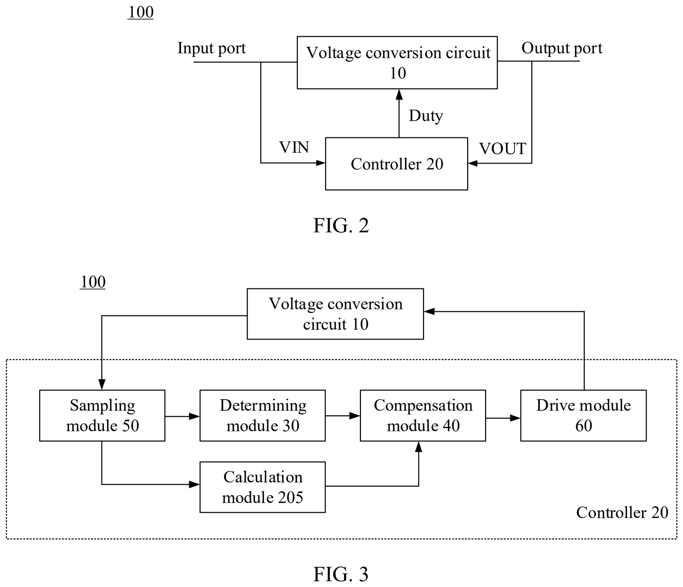

FIG. 2 is a diagram of a principle of a voltage converter according to an embodiment of this application. In this embodiment of this application, the voltage converter 100 includes a voltage conversion circuit 10 and a controller 20. Specifically, the voltage conversion circuit 10 includes all technical features of the voltage conversion circuit shown in FIG. 1. For specific functions and benefits of the voltage conversion circuit, refer to the descriptions of FIG. 1. Details are not described herein again. The voltage conversion circuit 10 has an input port and an output port, and is configured to receive an input voltage Vin from a power supply module, and perform buck conversion on the input voltage Vin to obtain an output voltage Vout, to supply power to a load. The controller 20 is configured to: determine a state of the voltage conversion circuit 10 based on an input voltage sampling value VIN and an output voltage sampling value VOUT of the circuit and a duty ratio value Duty of the circuit, and when the voltage conversion circuit 10 is in a first state, control the output voltage Vout by controlling a level conduction signal of the voltage conversion circuit 10, to supply power to the load.

It should be understood that the first state is a state of the voltage conversion circuit in the following case: When the input voltage Vin and the output voltage Vout of the voltage conversion circuit fall within a normal operating range, the input voltage Vin suddenly drops, and the output voltage Vout of the circuit still does not meet an operating voltage needed by the load even if the level conduction signal of the circuit is adjusted to a maximum range of the circuit. When the voltage conversion circuit is in the first state, a value of the duty ratio of the voltage conversion circuit reaches a maximum value of the circuit, and the maximum value that the value of the duty ratio of the circuit can reach is determined based on characteristics of a component included in the circuit. This is not particularly limited in this application. In some embodiments, the first state of the voltage conversion circuit is also referred to as the saturation state of the voltage conversion circuit. This is not particularly limited in this application.

FIG. 3 is a diagram of a principle of a controller in a voltage converter according to an embodiment of this application. In this embodiment of this application, the controller 20 includes a sampling module 50, a determining module 30, a compensation module 40, a drive module 60, and a calculation module 205. The sampling module 50 is configured to obtain a duty ratio sampling value Duty, an input voltage sampling value VIN, and an output voltage sampling value VOUT of a voltage conversion circuit 10 at each sampling moment. The determining module 30 is configured to determine a state of the voltage conversion circuit 10 at the sampling moment based on the input voltage value VIN, the output voltage value VOUT, and the duty ratio value Duty of the circuit that are sampled by the sampling module 50. In this embodiment of this application, a first state of the voltage conversion circuit 10 is subdivided into a first saturation state and a second saturation state. The determining module 30 determines, based on the sampling values of the sampling module 50, whether the voltage conversion circuit 10 is in the first state at the sampling moment, and determines a specific type of first state in which the voltage conversion circuit 10 is in. If the voltage conversion circuit 10 is in the first state at the sampling moment, the compensation module 40 is configured to determine a corresponding compensation value based on the first saturation state or the second saturation state that the voltage conversion circuit 10 is specifically in. The drive module 60 generates a drive signal based on the corresponding compensation value of the compensation module 40. The drive signal is used to drive a switching transistor in the voltage conversion circuit 10, to control an on state of the voltage conversion circuit 10, so as to perform buck conversion on an input voltage Vin of the voltage conversion circuit 10 to obtain an output voltage Vout, and supply power to a load.

The calculation module 205 calculates, based on the sampling values of the sampling module 50, a reference value at each sampling moment by using a preset calculation formula. When the voltage conversion circuit 10 is in a second time period, to be specific, at a moment at which the voltage conversion circuit 10 exits the first state, the compensation module 40 determines a compensation value in the second time period based on a reference value at a previous moment, and the drive module 60 generates a drive signal based on the corresponding compensation value.

It should be understood that a specific preset formula of the calculation module 205 is determined based on structures of the controller 20 and the voltage conversion circuit 10. This is not particularly limited in this application.

It should be understood that the second time period is a time period from a moment at which the voltage conversion circuit 10 exits the first state to a moment at which the voltage conversion circuit 10 recovers to normal voltage output, to be specific, a time period from a moment at which the input voltage Vin of the voltage conversion circuit 10 rises to a moment at which the input voltage Vin recovers to a normal input voltage range and the output voltage Vout also recovers to a rated output voltage range of the load. In a trigger mode in which the voltage conversion circuit 10 is in the second time period, a condition determiner may determine whether the input voltage sampling value VIN output by the sampling module 50 has recovered, and send indication information to the compensation module 40, so that the compensation module 40 outputs a compensation value by using a reference value output by the calculation module 205. In a trigger mode in which the voltage conversion circuit 10 is in the second time period, triggering may alternatively be performed by using a preset time period or the like. This is not particularly limited in this application.

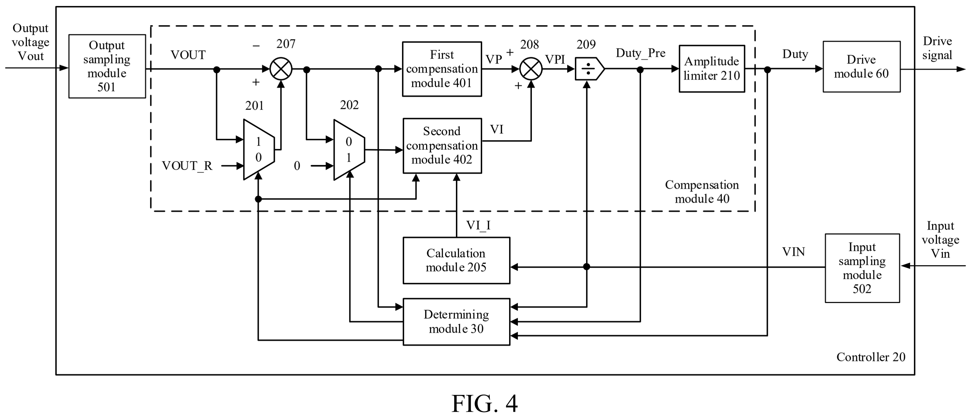

FIG. 4 is a diagram of a structure and a principle of a controller according to an embodiment of this application. In this embodiment of this application, a sampling module 50 of the controller 20 mainly includes an input sampling module 502 and an output sampling module 501, and a compensation module 40 mainly includes a first compensation module 401 and a second compensation module 402. The first compensation module 401 is configured to perform a proportional compensation operation based on an input value. The second compensation module 402 is configured to perform an integral compensation operation based on an input value.

In a possible implementation, the compensation module 40 further includes a first selector 201, a second selector 202, a first adder 207, a second adder 208, a divider 209, and an amplitude limiter 210. The first selector 201 and the second selector 202 are configured to receive indication information that is output by a determining module 30 and that indicates a state of a voltage conversion circuit 10, and select an output channel based on the indication information. The adder and the divider are configured to perform calculation on the input values and output values of the first compensation module 401 and the second compensation module 402 based on sample values and output values. The amplitude limiter 210 is configured to limit a calculation result of a compensation value, to prevent damage to a load caused by direct output of an excessively large calculated value.

It should be understood that structures, principles, and compositions of the sampling module 50, the compensation module 40, the controller 20, and the like provided in this embodiment of this application are merely a possible embodiment. Specifically, structures and component compositions of the compensation module 40, the sampling module 50, and the controller 20 may be determined based on actual parameter characteristics of the voltage conversion circuit 10 and electrical characteristics of the load. An actual protection scope shall be subject to the claims. This is not particularly limited in this application.

In this embodiment of this application, an input signal of the controller 20 includes an input voltage Vin and an output voltage Vout of the voltage conversion circuit 10. The input signal is sampled by the sampling module 50 to obtain a sampling value, and the sampling value participates in an internal operation of the controller 20. The input voltage Vin of the voltage conversion circuit 10 is sampled by the input sampling module 502 to obtain an input voltage sampling value VIN. The output voltage Vout of the voltage conversion circuit 10 is sampled by the output sampling module 501 to obtain an output voltage sampling value VOUT. An output signal of the controller 20 is a drive signal for adjusting the voltage conversion circuit 10.

It should be understood that the controller 20 determines a state of the voltage conversion circuit 10 based on a duty ratio value Duty of the voltage conversion circuit. A used Duty value may be a Duty value obtained through sampling by the sampling module 50, or may be an obtained output value of the compensation module 40. A manner of obtaining the Duty value by the determining module 30 of the controller 20 may be adaptively modified based on an actual circuit characteristic and structure. This application provides only a possible implementation. A specific protection scope shall be subject to the claims. This is not particularly limited in this application.

It should be understood that the input voltage Vin includes a voltage of a current input to an input port of the voltage conversion circuit 10, and the output voltage Vout includes a voltage of a current output by an output port of the voltage conversion circuit 10. When the voltage conversion circuit 10 is in a first state in a first time period, a second value may be obtained by sampling the input voltage Vin. When the voltage conversion circuit 10 is in the first state in the first time period, a third value may be obtained by sampling the output voltage Vout. The second value includes VIN, and the third value includes VOUT.

In a possible implementation, an input value of a channel 1 of the first selector 201 is VOUT, and an input value of a channel 0 is a preset output voltage value VOUT_R of the voltage conversion circuit 10. An input value of a channel 1 of the second selector 202 is 0, and an input value of a channel 0 is an output value of the first adder 207. When the first selector 201 selects the channel 1, the output value of the first adder 207 is 0. When the first selector 201 selects the channel 0, the output value of the first adder 207 is a difference between VOUT and VOUT_R, to be specific, a specified difference between the preset output voltage value of the voltage conversion circuit 10 and an actual output voltage sampling value. The difference is denoted as Ve: VOUT _R-VOUT = Ve. That is, when the first selector 201 selects the channel 0, the output value of the first adder 207 is Ve. The output value of the first adder 207 is one of input values of the first compensation module 401. When the second selector 202 selects the channel 0, input of the second selector 202 is output of the first adder 207. To be specific, when the second selector 202 selects the channel 0, if the first selector 201 selects the channel 1, input of the second selector 202 is 0; or if the first selector 201 selects the channel 0, input of the second selector 202 is Ve. When the second selector 202 selects the channel 1, an input value of the second selector 202 is 0, and an output value is also 0. The output value of the second selector 202 is one of input values of the second compensation module 402.

It should be understood that the preset output voltage value is a voltage value output when the voltage conversion circuit 10 is in a normal state, and the preset output voltage value includes VOUT_R.

It should be understood that, in some embodiments, the preset output voltage value may also be referred to as a reference output voltage value, a rated output voltage value, a reference voltage, or the like. An actual protection scope is subject to the claims. This is not particularly limited in this application.

It should be understood that, in some embodiments, the first compensation module may also be referred to as a first compensator, a first compensation circuit, a proportional compensator, a proportional compensation circuit, or the like. An actual protection scope is subject to the claims. This is not particularly limited in this application.

It should be understood that, in some embodiments, the second compensation module may also be referred to as a second compensator, a second compensation circuit, an integral compensator, an integral compensation circuit, or the like. An actual protection scope is subject to the claims. This is not particularly limited in this application.

In a possible implementation, the input value of the first compensation module 401 includes the output value of the first adder 207, and an output value of the first compensation module 401 is a voltage value obtained by the first compensation module 401 by performing calculation on the input value, and is denoted as VP. The input value of the second compensation module 402 includes first indication information sent by the determining module 30 to the first selector 201, the output value of the second selector 202, and an output value VI_I of a calculation module 205. An output value of the second compensation module 402 is a voltage value obtained by the second compensation module 402 by performing calculation on the input value based on the first indication information, and is denoted as VI.

In a possible implementation, when the input voltage and the output voltage of the voltage conversion circuit 10 stably fall within a normal operating range, the first selector 201 selects the channel 0, and the second selector 202 selects the channel 0. To be specific, when both the sampled input voltage VIN and the sampled output voltage VOUT of the voltage conversion circuit 10 that are input to the controller 20 fall within a normal operating range, the first selector 201 selects the channel 0, the output of the first adder 207 is a difference between the output voltage sampling value VOUT and the rated output voltage VOUT_R, and the input value of the first compensation module 401 is Ve. The second selector 202 selects the channel 0, and the input value of the second compensation module 402 is Ve.

In a possible implementation, an input value of the second adder 208 includes the output value VP of the first compensation module 401 and the output value VI of the second compensation module 402, and an output value is a sum of VP and VI and is denoted as VPI.

In a possible implementation, an input value of the divider 209 includes the output value VPI of the second adder 208 and the input voltage sampling value VIN of the voltage conversion circuit 10, and an output value is a pre-limiting value of a duty ratio Duty, and is denoted as Duty_Pre.

In a possible implementation, an input value of the amplitude limiter 210 includes the pre-limiting value Duty_Pre of the duty ratio Duty, and output is a Duty value participating in duty ratio adjustment for the voltage conversion circuit 10. A function of the amplitude limiter 210 is to ensure that an output duty ratio value is less than or equal to a preset duty ratio value Duty_Max. To be specific, a Duty value output by the amplitude limiter 210 meets the following condition: Duty ≤ Duty_Max.

It should be understood that the preset duty ratio value Duty_Max includes a maximum value that the duty ratio value of the voltage conversion circuit 10 can reach, and the maximum value that the value of the duty ratio of the circuit can reach is determined based on characteristics of a component included in the circuit. This is not particularly limited in this application. In some embodiments, a state in which the value of the duty ratio is greater than or equal to the preset duty ratio value is also referred to as a state in which the duty ratio reaches saturation, a state in which the value of the duty ratio reaches the maximum, or the like. This is not particularly limited in this application.

In a possible implementation, an input value of the calculation module 205 includes the input voltage sampling value VIN of the voltage conversion circuit 10, and a function of the calculation module 205 is to calculate an output value based on the input value by using a preset calculation formula. The output value of the calculation module 205 is VI_I.

It should be understood that, in some possible embodiments, the calculation module may also be referred to as a calculator, a calculation circuit, or the like. These names do not limit the protection scope of this application. An actual protection scope is subject to the claims. This is not particularly limited in this application.

It should be understood that the calculation module 205 determines a reference value at each sampling moment based on an input voltage value at each sampling moment and the preset duty ratio value. The reference value includes VI_I.

In a possible implementation, the calculation module 205 includes a preset calculation formula: VI_I=Duty _Max * VIN , which is used to calculate the input value of the second compensation module 402. The calculation formula may be used to calculate a reference value of the voltage conversion circuit 10 at each sampling moment.

It should be understood that the preset calculation formula of the calculation module 205 may be determined based on an actual structural composition of the controller and electrical characteristics of the load. This is not particularly limited in this application.

In a possible implementation, a drive signal output by a drive module 60 may control upper and lower bridge arm field-effect transistors Q1 and Q2 to be turned on or off, to modulate the output voltage Vout of the voltage conversion circuit 10. The drive signal that controls the upper and lower bridge arm field-effect transistors Q1 and Q2 to be turned on or off includes an upper-transistor turn-on signal HSG and a lower-transistor turn-off signal LSG.

It should be understood that the composition and the connection mode of the controller 20 provided in this embodiment of this application are merely a possible example implementation, but do not constitute any limitation on a structure of the controller 20. A specific protection scope is subject to the claims. This is not particularly limited in this application.

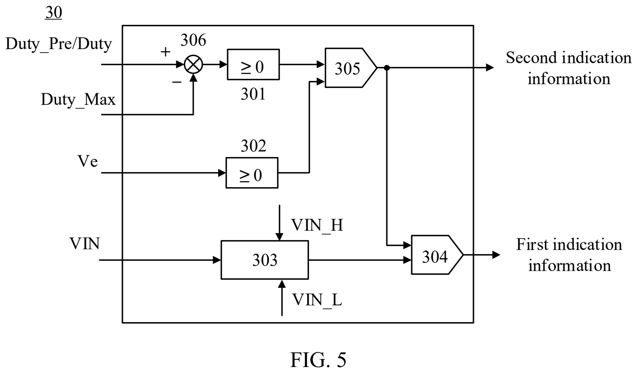

FIG. 5 is a diagram of a structure of a determining module in a controller according to an embodiment of this application. In this embodiment of this application, an input value of the determining module 30 includes an output value of a first adder 207, an output value Duty_Pre of a divider 209, an output value Duty of an amplitude limiter 210, and an input voltage sampling value VIN of a voltage conversion circuit 10. Output of the determining module 30 is first indication information and second indication information. The first indication information indicates channel selection of a first selector 201. The second indication information indicates channel selection of a second selector 202.

It should be understood that, in some possible embodiments, the determining module may also be referred to as a determining circuit, a detection circuit, a detector, or the like. These names do not limit the protection scope of this application. An actual protection scope is subject to the claims. This is not particularly limited in this application.

In a possible implementation, the determining module 30 includes three comparators: a first comparator 301, a second comparator 302, and a third comparator 303; the determining module 30 further includes two logic AND gates: a first AND gate 304 and a second AND gate 305; and the determining module further includes a third adder 306, configured to perform calculation on an input value. The determining module 30 may perform determining on the input value based on a preset determining condition, and output indication information for the first selector 201 and the second selector 202. The controller 20 adjusts input values of a first compensation module 401 and a second compensation module 402 based on the received indication information by controlling channel selection of the first selector 201 and the second selector 202, to adjust a Duty value to be output by the controller 20.

It should be understood that the structure of the determining module 30 provided in this embodiment of this application is merely a possible example implementation, but does not constitute any limitation on a structure of the determining module. A specific protection scope is subject to the claims. This is not particularly limited in this application.

In a possible implementation, an input value of the third adder 306 includes a pre-limiting duty ratio value Duty_Pre and a preset duty ratio value Duty_Max, and an output value of the third adder 306 includes a difference between Duty_Pre and Duty_Max, in other words, the output value includes Duty_Pre-Duty_Max. The output value is an input value of the first comparator 301. The first comparator 301 may be configured to determine, through comparison, whether the output value of the third adder 306 is ≥ 0. In other words, the first comparator 301 may be configured to determine, through comparison, whether the difference between Duty_Pre and Duty_Max is ≥ 0. To be specific, the first comparator 301 may be configured to determine magnitudes of two values: the pre-limiting duty ratio value Duty_Pre and the preset duty ratio value Duty_Max.

In a possible implementation, an input value of the third adder 306 includes a duty ratio value Duty output by a compensation module 40 and a preset duty ratio value Duty_Max, and an output value of the third adder 306 includes a difference between Duty and Duty_Max, in other words, the output value includes Duty-Duty_Max. The output value is an input value of the first comparator 301. The first comparator 301 may be configured to determine, through comparison, whether the output value of the third adder 306 is ≥ 0. In other words, the first comparator 301 may be configured to determine, through comparison, whether the difference between Duty and Duty_Max is ≥ 0 . To be specific, the first comparator 301 may be configured to determine magnitudes of two values: the duty ratio value Duty output by the compensation module 40 and the preset duty ratio value Duty_Max.

It should be understood that a comparison condition of the first comparator 301 includes: The Duty value or the Duty_Pre value is compared with the preset duty ratio value Duty_Max, and the sampling module 50 may sample the Duty value or the Duty_Pre value and input a sampling value to the first comparator 301; and/or the first comparator 301 directly obtains the Duty value output by the compensation module 40 or the Duty_Pre value output by the divider 209. A specific protection scope is subject to the claims. This is not particularly limited in this application.

In a possible implementation, an input value of the second comparator 302 is a difference between a sampled output value VOUT of the voltage conversion circuit 10 and a specified preset output voltage value VOUT_R, in other words, the input value of the second comparator 302 is Ve. The second comparator 302 may be configured to determine, through comparison, whether the difference between the sampled output value VOUT of the voltage conversion circuit 10 and the specified preset output voltage value VOUT_R is ≥ 0 . In other words, the second comparator 302 may be configured to determine, through comparison, whether Ve is ≥ 0. To be specific, the second comparator 302 may be configured to determine magnitudes of two values: the output value VOUT of the voltage conversion circuit 10 and the specified preset output voltage value VOUT_R.

It should be understood that the preset output voltage value VOUT_R includes a value of a voltage needed during normal operation of a load connected to the voltage conversion circuit 10. A value of the preset output voltage value VOUT_R of the circuit is determined based on characteristics of the load connected to the circuit. This is not particularly limited in this application.

In a possible implementation, input of the second AND gate 305 is output of the first comparator 301 and output of the second comparator 302. Determining logic of the second AND gate 305 is as follows: The second AND gate 305 outputs the second indication information when both input of the first comparator 301 and input of the second comparator 302 are ≥ 0.

In a possible implementation, input of the third comparator 303 is the sampled input value VIN of the voltage conversion circuit 10, and when the input voltage sampling value VIN is a preset input voltage value, determining information is output. Input of the first AND gate 304 is output of the third comparator 303 and output of the second AND gate 305. Determining logic of the first AND gate 304 is as follows: When the input of the third comparator is less than the preset input voltage value and both input of the first comparator 301 and input of the second comparator 302 are ≥ 0 , the first AND gate 304 outputs the first indication information, and the determining module 30 outputs the first indication information.

It should be understood that the preset input voltage value includes a lower limit value of an input voltage range of the voltage conversion circuit 10 during normal operation of the load connected to the voltage conversion circuit. The input voltage range of the circuit during normal operation and the lower limit value of the voltage range are determined based on characteristics of a component included in the circuit. This is not particularly limited in this application.

In a possible implementation, the third comparator 303 includes a hysteresis comparator, and a specified threshold range includes a hysteresis comparison threshold. A specified upper threshold limit is VIN_H, and a specified lower threshold limit is VIN_L. The preset input voltage value includes the lower threshold limit of the hysteresis comparator. In other words, the preset input voltage value includes VIN_L. To be specific, when the input voltage sampling value VIN is less than or equal to the preset input voltage value VIN_L and the second AND gate 305 outputs the second indication information, the first AND gate 304 outputs the first indication information, and the determining module 30 outputs the first indication information.

It should be understood that the preset input voltage value VIN_L serves as a lower limit of the hysteresis comparator, and a specific value of the preset input voltage value VIN_L is determined based on the used hysteresis comparator. This is not particularly limited in this application.

In a possible implementation, the first indication information output by the first AND gate 304 may include 0 and 1. Output information of the first indication information being 1, in other words, the output first indication information being set to a high level, indicates the first selector 201 to switch a channel, to be specific, switch from a channel 0 to a channel 1.

In a possible implementation, the second indication information output by the second AND gate 305 may include 0 and 1. Output information of the second indication information being 1, in other words, the output second indication information being set to a high level, indicates the second selector 202 to switch a channel, to be specific, switch from a channel 0 to a channel 1.

The second indication information may indicate channel selection of the second selector 202. When a determining condition of the first comparator 301 is met and a determining condition of the second comparator 302 is met, the second AND gate 305 performs logic determining and outputs the second indication information. The output second indication information is set to a high level, to indicate the second selector 202 to switch to the channel 1. In this case, the voltage conversion circuit 10 is in a second saturation state, and a duty ratio Duty value output by the controller 20 is equal to the preset duty ratio value Duty_Max. In this case, an input value of the second compensation module 402 is 0. In other words, an input value of an integral compensation circuit is 0. An output value of the second compensation module 402 no longer increases. In other words, an output value of the integral compensation circuit no longer increases. This ensures that the voltage conversion circuit 10 does not enter deep saturation.

The first indication information may indicate channel selection of the first selector 201. When the determining conditions of the first comparator 301 and the second comparator 302 are met and the third comparator 303 detects that the sampled input voltage VIN is less than the preset input voltage value VIN_L, the first AND gate 304 performs logic determining and outputs the first indication information. The output first indication information is set to a high level, to indicate the first selector 201 to switch to the channel 1. To be specific, when the second indication information is 1 and the third comparator 303 detects that the sampled input voltage VIN is less than the preset input voltage value VIN_L, the first indication information output by the first AND gate 304 is set to a high level, and the first indication information value is 1. In this case, the voltage conversion circuit 10 is in a first saturation state, and an output duty ratio of the voltage conversion circuit 10 is saturated and reaches a maximum duty ratio value. To be specific, a Duty value output by the voltage conversion circuit 10 is equal to the preset duty ratio value Duty_Max. When the voltage conversion circuit 10 enters the first saturation state, the first selector 201 receives the first indication information that is set to a high level, and chooses to switch to the channel 1. In this case, output of the first selector 201 is VOUT. To be specific, an operation performed at the first adder 207 is VOUT-VOUT, output of the first adder 207 is 0, and input of the first compensation module 401 is set to 0. In other words, the preset output voltage value VOUT_R selectively follows the actually sampled output voltage VOUT, a difference between the two voltage values, that is, the Ve value, is 0, and both input of the first compensation module 401 and input of the second compensation module 402 are 0.

When the input voltage sampling value VIN of the voltage conversion circuit 10 recovers to a normal operating range, the voltage conversion circuit 10 switches from the first state to exit the first state. Upon exit from the first state, due to a delay of loop adjustment, at a moment at which the sampled input voltage VIN recovers, the first indication information output by the first AND gate 304 is still set to a high level, in other words, the first indication information is 1. In this case, an input value of the second compensation module 402 includes a calculated value of the calculation module 205, an output value of the second selector 202, and the first indication information output by the determining module 30. When the first indication information is set to a high level, an assigned output value of an integral loop of the second compensation module 402 is the calculated value of the calculation module 205. The calculated value needs to ensure matching between the duty ratio Duty value and the input voltage sampling value VIN upon exit from the first state.

In a possible implementation, the calculation module 205 includes: calculating a first reference value that is input to the second compensation module 402 when the voltage conversion circuit 10 exits the first state. A preset calculation formula in the calculation module 205 includes: Duty_Max × VIN . This can ensure matching between the Duty value output by the controller 20 and the input voltage sampling value VIN upon exit from the first state.

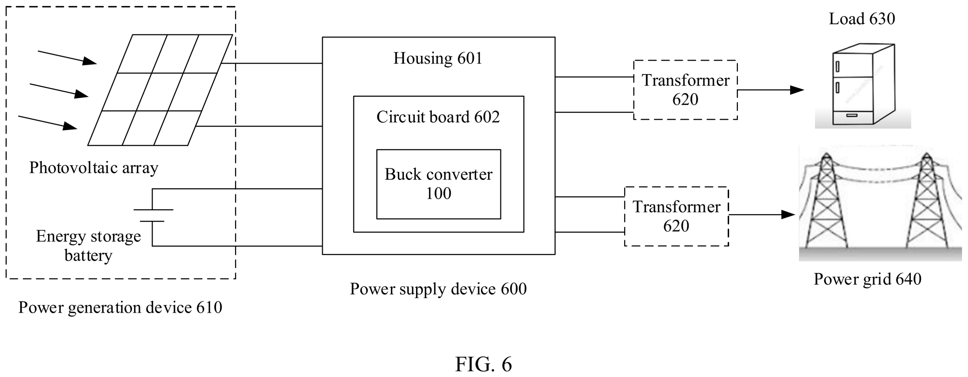

FIG. 6 is a diagram of a structure of a power supply device according to an embodiment of this application. The power supply device 600 includes a housing 601, a circuit board 602 disposed in the housing 601, and a voltage converter 100 disposed on the circuit board 602. The power supply device 600 is used in a direct current voltage conversion scenario, and is configured to receive a direct current from a power generation device 610 and perform voltage conversion. A voltage obtained through conversion is converted by a transformer 620 into an alternating current, and the alternating current is output to a load 630 or a power grid 640. The voltage converter 100 includes the voltage converter 100 in FIG. 2 to FIG. 5. For specific functions and benefits of the voltage converter 100, refer to the descriptions of FIG. 2 to FIG. 5. Details are not described herein again.

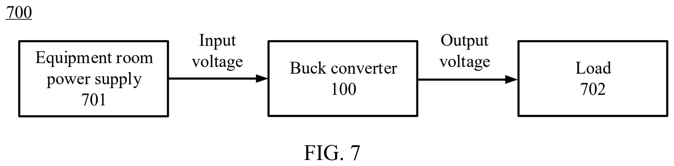

FIG. 7 is a diagram of a structure of a power supply system according to an embodiment of this application. The power supply system 700 includes an equipment room power supply 701, a voltage converter 100, and a load 702. The voltage converter 100 includes the voltage converter 100 in FIG. 2 to FIG. 5. For specific functions and benefits of the voltage converter 100, refer to the descriptions of FIG. 2 to FIG. 5. Details are not described herein again.

A person of ordinary skill in the art may be aware that circuits and steps in examples described with reference to embodiments disclosed in this specification can be implemented by electronic hardware or a combination of computer software and electronic hardware. Whether the functions are performed by hardware or software depends on particular applications and design constraints of technical solutions. A person skilled in the art may use different methods to implement the described functions for each particular application, but it should not be considered that the implementation goes beyond the scope of this application.

It can be clearly understood by a person skilled in the art that, for ease and brevity of description, for detailed working processes of the foregoing method, apparatus, and unit, reference may be made to corresponding processes in the foregoing method embodiments. Details are not described herein again.

In several embodiments provided in this application, it should be understood that the disclosed circuit, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed.

In addition, functional units in embodiments of this application may be integrated into one processing unit, or each unit may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computing device (which may be a personal computer, a server, a network device, or the like) to perform all or some of the steps of the methods in embodiments of this application. The storage medium includes any medium that can store program code, for example, a USB flash drive, a removable hard disk, a read-only memory (Read-Only Memory, ROM), a random access memory (Random Access Memory, RAM), a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A voltage converter, comprising:
a voltage conversion circuit, configured to receive an input voltage from a power supply module, and perform buck conversion on the input voltage to obtain an output voltage, to supply power to a load; and
a controller, configured to: when the voltage conversion circuit is in a first state, control the output voltage by controlling a level conduction signal of the voltage conversion circuit, to supply power to the load, wherein
the first state is a state in which a value of a duty ratio of the voltage conversion circuit is greater than or equal to a preset duty ratio value, and the first state comprises a first saturation state and a second saturation state;
the first saturation state is a state in which the voltage conversion circuit is in the first state and a value of the input voltage is less than a preset input voltage value; and
the second saturation state is a state in which the voltage conversion circuit is in the first state and a value of the output voltage is less than or equal to a preset output voltage value.

2. The voltage converter according to claim 1, wherein the controller comprises:
a sampling module, configured to obtain a value of the duty ratio of the voltage conversion circuit, a value of the input voltage, and a value of the output voltage at each sampling moment, wherein a sampling value corresponding to the duty ratio in a first time period is a first value, a sampling value corresponding to the input voltage in the first time period is a second value, a sampling value corresponding to the output voltage in the first time period is a third value, and the first time period is a time period in which the voltage conversion circuit is in the first state;
a determining module, configured to determine, based on the first value, the second value, and the third value, that the voltage conversion circuit is in the first saturation state or the second saturation state in the first time period;
a compensation module, configured to determine a corresponding compensation value based on the first saturation state or the second saturation state; and
a drive module, configured to generate a drive signal based on the compensation value, wherein the drive signal is used to drive at least one switching transistor in the voltage conversion circuit, to control the voltage conversion circuit to perform buck conversion on the input voltage to obtain the output voltage, to supply power to the load.

3. The voltage converter according to claim 2, wherein the determining module is further configured to:
when the first value of the voltage conversion circuit is greater than or equal to the preset duty ratio value, the second value is less than the preset input voltage value, and the third value is less than or equal to the preset output voltage value, determine that the voltage conversion circuit is in the first saturation state; or
when the first value of the voltage conversion circuit is greater than or equal to the preset duty ratio value and the third value is less than or equal to the preset output voltage value, determine that the voltage conversion circuit is in the second saturation state.

4. The voltage converter according to claim 2 or 3, wherein the determining module comprises:
a first comparator, configured to compare the first value with the preset duty ratio value;
a second comparator, configured to compare the third value with the preset output voltage value;
a third comparator, configured to compare the second value with the preset input voltage value;
a first AND gate, configured to obtain comparison results of the first comparator, the second comparator, and the third comparator, and determine to output first indication information, wherein the first indication information indicates whether the voltage conversion circuit is in the first saturation state; and
a second AND gate, configured to obtain comparison results of the first comparator and the second comparator, and determine to output second indication information, wherein the second indication information indicates whether the voltage conversion circuit is in the second saturation state.

5. The voltage converter according to any one of claims 2 to 4, wherein the compensation module comprises:
a first compensation module, configured to perform a proportional compensation operation; and
a second compensation module, configured to perform an integral compensation operation, wherein
when the voltage conversion circuit is in the first saturation state, input of the first compensation module and the second compensation module is a difference between the third value and the preset output voltage value; or
when the voltage conversion circuit is in the second saturation state, input of the first compensation module is a difference between the third value and the preset output voltage value, and input of the second compensation module is 0.

6. The voltage converter according to any one of claims 1 to 5, wherein the controller further comprises:
a calculation module, configured to calculate a reference value at each sampling moment based on the value of the input voltage at each sampling moment and the preset duty ratio value, wherein
the compensation module is further configured to determine a second compensation value in a second time period based on a first reference value, wherein the first reference value is a reference value at a sampling moment corresponding to the first time period, and the second time period is a time period of preset duration that elapses after the voltage conversion circuit exits the first state; and
the drive module is further configured to generate a drive signal in the second time period based on the obtained second compensation value, wherein the drive signal is used to drive at least one switching transistor in the voltage conversion circuit, to control the voltage conversion circuit to perform buck conversion on the input voltage to obtain the output voltage, to supply power to the load.

7. A power supply system, comprising an equipment room power supply, a voltage converter, and a load, wherein the voltage converter comprises:
a voltage conversion circuit, configured to receive an input voltage from the equipment room power supply, and perform buck conversion on the input voltage to obtain an output voltage, to supply power to the load; and
a controller, configured to: when the voltage conversion circuit is in a first state, control the output voltage by controlling a level conduction signal of the voltage conversion circuit, to supply power to the load, wherein
the first state is a state in which a value of a duty ratio of the voltage conversion circuit is greater than or equal to a preset duty ratio value, and the first state comprises a first saturation state and a second saturation state;
the first saturation state is a state in which the voltage conversion circuit is in the first state and a value of the input voltage is less than a preset input voltage value; and
the second saturation state is a state in which the voltage conversion circuit is in the first state and a value of the output voltage is less than or equal to a preset output voltage value.

8. The power supply system according to claim 7, wherein the controller comprises:
a sampling module, configured to obtain a value of the duty ratio of the voltage conversion circuit, a value of the input voltage, and a value of the output voltage at each sampling moment, wherein a sampling value corresponding to the duty ratio in a first time period is a first value, a sampling value corresponding to the input voltage in the first time period is a second value, a sampling value corresponding to the output voltage in the first time period is a third value, and the first time period is a time period in which the voltage conversion circuit is in the first state;
a determining module, configured to determine, based on the first value, the second value, and the third value, that the voltage conversion circuit is in the first saturation state or the second saturation state in the first time period;
a compensation module, configured to determine a corresponding compensation value based on the first saturation state or the second saturation state; and
a drive module, configured to generate a drive signal based on the compensation value, wherein the drive signal is used to drive at least one switching transistor in the voltage conversion circuit, to control the voltage conversion circuit to perform buck conversion on the input voltage to obtain the output voltage, to supply power to the load.

9. The power supply system according to claim 8, wherein the determining module is further configured to:
when the first value of the voltage conversion circuit is greater than or equal to the preset duty ratio value, the second value is less than the preset input voltage value, and the third value is less than or equal to the preset output voltage value, determine that the voltage conversion circuit is in the first saturation state; or
when the first value of the voltage conversion circuit is greater than or equal to the preset duty ratio value and the third value is less than or equal to the preset output voltage value, determine that the voltage conversion circuit is in the second saturation state.

10. The power supply system according to claim 8 or 9, wherein the controller further comprises:
a calculation module, configured to calculate a reference value at each sampling moment based on the value of the input voltage at each sampling moment and the preset duty ratio value, wherein
the compensation module is further configured to determine a second compensation value in a second time period based on a first reference value, wherein the first reference value is a reference value at a sampling moment corresponding to the first time period, and the second time period is a time period of preset duration that elapses after the voltage conversion circuit exits the first state; and
the drive module is further configured to generate a drive signal in the second time period based on the obtained second compensation value, wherein the drive signal is used to drive at least one switching transistor in the voltage conversion circuit, to control the voltage conversion circuit to perform buck conversion on the input voltage to obtain the output voltage, to supply power to the load.
